# EUROPEAN PATENT SPECIFICATION

(11) **EP 0 325 481 B1**
(45) Date of publication and mention of the grant of the patent: **24.03.1993**
(21) Application number: 89300558.7
(22) Date of filing: 20.01.1989
(51) Int. Cl.: B60H 1/00

(54) **Automotive air conditioning system**
Klimaanlage für Kraftfahrzeuge
Système de climatisation de véhicules automobiles

(30) Priority: 21.01.1988 JP 5284/88
(43) Date of publication of application: 26.07.1989
(73) Proprietor: SANDEN CORPORATION, Isesaki-shi Gunma, 372 (JP)
(72) Inventor: Nakazawa, Takeharu, Sawa-gun Gunma 370-11 (JP); Fujita, Toshihiko, Isesaki-shi Gunma 372 (US)
(74) Representative: Jackson, Peter Arthur

(56) References cited:
- US-A- 3 170 509
- US-A- 4 574 873
- PATENT ABSTRACTS OF JAPAN, vol. 10, no. 130 (M-478)[2187], 14th May 1986; & JP-A-60 255 522 (NIPPON DENSO K.K.) 17-12-1985
- PATENT ABSTRACTS OF JAPAN, vol. 6, no. 216 (M-168)[1094], 29th October 1982; & JP-A-57 121 914 (NIPPON DENSO K.K.) 29-07-1982
- PATENT ABSTRACTS OF JAPAN, vol. 10, no. 354 (P-521)[2410], 28th November 1986; & JP-A-61 150 815 (NIPPON DENSO CO. LTD) 09-07-1986
- PATENT ABSTRACTS OF JAPAN, vol. 9, no. 162 (M-394)[1885], 6th July 1985; & JP-A-60 35 619 (NIPPON DENSO K.K.) 23-02-1985

## Description

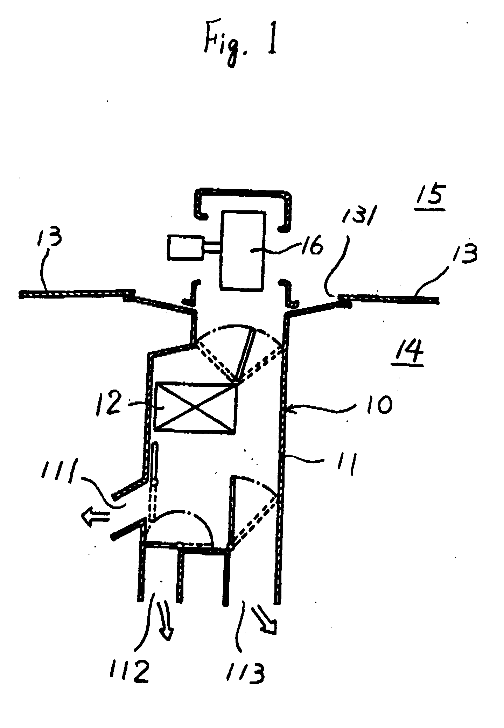

Figure 1 of the accompanying drawings shows a heating system for some kind of automobile. The system 10 includes a duct 11 through which air flows and a heater 12 disposed within duct 11. One end opening of the duct 11 is located at an opening 131 which is formed in a partition wall 13 separating a passenger compartment 14 and an engine compartment 15. An air blower 16 for blowing air through the duct 11 is disposed adjacent to the one open end of the duct 11. First, second and third outlet openings 111, 112 and 113 are formed at the other open end of the duct 11. The first opening 111 leads blown air to a windshield of an automobile (not shown). The second opening 112 leads blown air to a foot space of the passenger compartment 14. The third opening 113 leads blown air to above waist height in the passenger compartment 14.

When an automobile is required to be equipped with an air conditioning system instead of the above-mentioned heating system, some difficulties, such as restricted free space in both passenger and engine compartments 14 and 15, and additional boring through the partition wall 13, occur.

It is an object of this invention to provide an automobile air conditioning system which can be substituted for a conventional heating system without restricting free space in both the passenger and engine compartments and/or boring additional holes in the automobile body.

US-A-3170509 discloses an automotive air conditioning system comprising a duct through which conditioned air can be blown by an air blower to a passenger compartment of an automobile, one open end of the duct being located at an opening formed in a partition wall which separates the passenger compartment and an engine compartment and the air blower being located adjacent to the one open end of the duct; an evaporator disposed within the duct; a heater disposed within the duct; an open shell covering the air blower with the open end of the shell connected to the one open end of the duct; and a chamber having an outside air intake and a passenger compartment air intake which are alternatively opened and closed by a damper- and according to the invention, such a system is characterised in that the first shell is located on the engine compartment side of the partition and cooperates with a second shell on the passenger compartment side of the partition to provide an enclosure for the chamber and duct; in that the outside air intake is provided in the first shell; and in that the chamber is defined by the first shell, a wall part of the second shell and a partition wall covering the evaporator, whereby the duct passes in a U-shape around three sides of the chamber.

In the accompanying drawings:-
Figure 1 is a schematic sectional view of a heating system used for some kind of automobile;
Figure 2 is a schematic side view of an automobile air conditioning system in accordance with this invention; and,
Figure 3 is a fragmentary schematic sectional view taken on the line A-A in Figure 2.

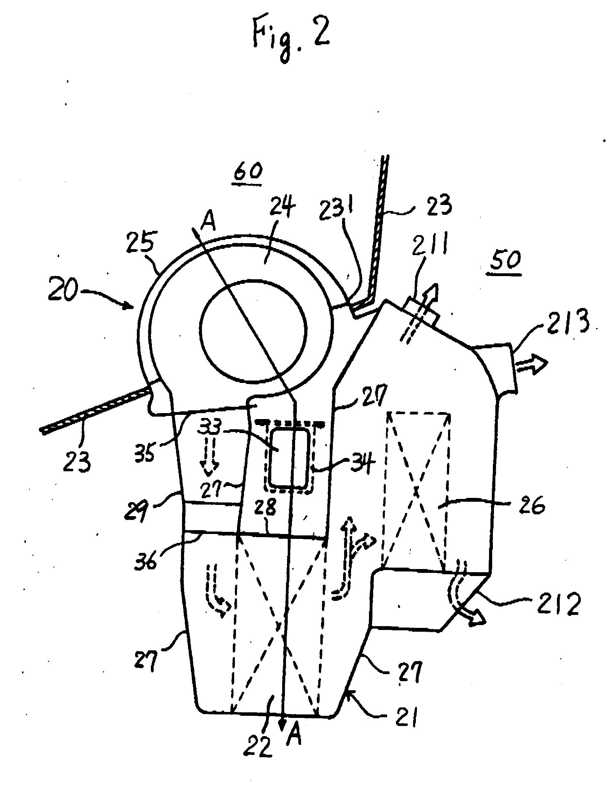

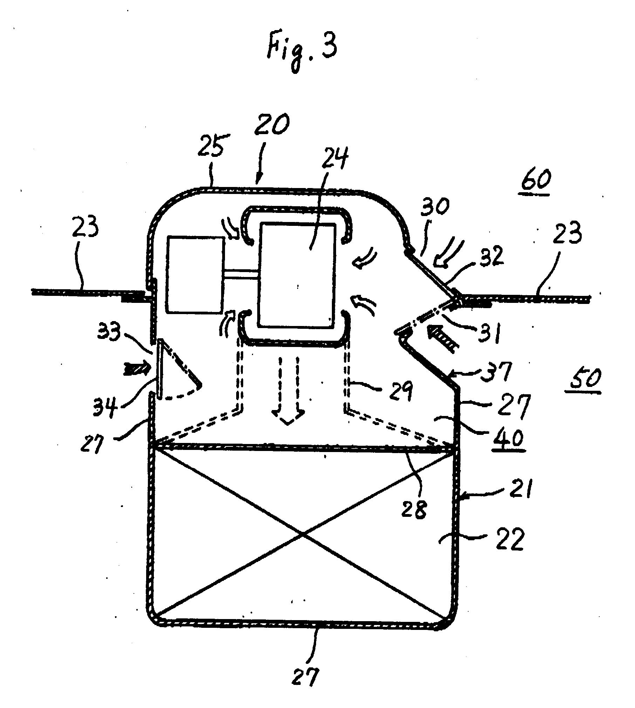

As shown in Figures 2 and 3, an automotive air conditioning system 20 includes a duct 21 through which air flows. The duct 21 is folded, i.e. incorporates a bend, and an evaporator 22 is mounted at the angle thereof. The upstream open end of the duct 21, with respect to the air flow, is located at an opening 231 formed in a partition wall 23 which divides a passenger compartment 50 from an engine compartment 60. An air blower 24 for blowing air to the passenger compartment 50 through the duct 21 is located adjacent to the upstream open end of the duct 21. A cover member 25 with the configuration of a one open ended shell covers the air blower 24, and its open end is connected to the upstream open end of the duct 21. A heater core 26 is disposed within a portion of the duct 12 located downstream of the evaporator 22. First, second and third outlet openings 211, 212 and 213 are formed at a downstream part of the duct 21. The first opening 211 leads blown air to a windshield of an automobile (not shown). The second opening 212 leads blown air to a foot space of the passenger compartment 50. The third opening 213 leads blown air to above waist height in the passenger compartment 34.

The cover member 25, a wall 27 of the duct 21 and a partition wall 28 disposed above the evaporator 22, define a chamber 40. The cover member 25 is provided with an output port 35 from which air is blown. A duct 29 links the outlet port 35 to an inlet port 36 formed on the wall 27 of the duct 21 and hence to the evaporator 22.

An outside air intake 30 and a passenger compartment air intake 31, which are alternatively opened and closed by a damper 32, are formed adjacent to one another in a wall shell 37 of the chamber 40. An additional passenger compartment air intake 33, which is opened and closed by a dead weight type damper 34, is formed at the opposite side of the shell wall 37 of the chamber 40. The function of the additional passenger compartment air intake 33 is to supplement recirculation of passenger compartment air to the duct 21.

When the air blower 24 is operated in a situation that the damper 32 closes the outside air intake 30, that is, the passenger compartment air intake 31 is open, it is suitable for air conditioning during hot ambience, such as during day time in summer. Passenger compartment air is thus taken into the duct 21 through the passenger compartment air intake 31 and flows along the duct 21. Furthermore, when the speed of the air flow in the duct 21 exceeds some threshold value, the additional passenger compartment air intake 33 is opened so that passenger compartment air is taken into the duct 21 through the additional passenger compartment air intake 33 and flows along the duct 21. Accordingly, effective cooling in the passenger compartment 50 is obtained owing to the increased recirculation of passenger compartment air.

On the other hand, when the air blower 24 is operated in a situation that the damper 32 closes the passenger compartment air intake 31, that is the outside air intake 30 is open, it is suitable for air conditioning during a cold ambience such as in the winter. Outside air is then taken into the duct 21 through the outside air intake 30 and flows along the duct 21. Furthermore, when the speed of air flow along the duct 21 exceeds some threshold value, the additional passenger compartment air intake 33 is opened so that passenger compartment air is taken into the duct 21 through the additional passenger compartment air intake 33 and flows along the duct 21. Accordingly, the ability to heat the passenger compartment 50 is increased.

When ventilation of the passenger compartment 50 is done by utilising ram pressure of the moving automobile, that is the operation of the air blower 24 is stopped and the outside air intake 30 is opened, the additional passenger compartment air intake 33 is kept closed due to the positive pressure in the duct 21 so that only outside air is taken into the duct 21 through the outside air intake 30 and flows along the duct 21. Finally, the air flowing through the duct 21 passes into the passenger compartment 50 through first, second and/or third openings 211, 212 and 213.

## Claims

1. An automotive air conditioning system comprising a duct (21) through which conditioned air can be blown by an air blower (24) to a passenger compartment (50) of an automobile, one open end of the duct being located at an opening (231) formed in a partition wall (23) which separates the passenger compartment (50) and an engine compartment (60) and the air blower being located adjacent to the one open end of the duct; an evaporator (22) disposed within the duct; a heater (26) disposed within the duct; an open first shell (25) covering the air blower with the open end of the shell connected to the one open end of the duct; and a chamber (40) having an outside air intake (30) and a passenger compartment air intake (31) which are alternatively opened and closed by a damper (32); characterised in that the first shell (25) is located on the engine compartment (60) side of the partition (23) and cooperates with a second shell (27) on the passenger compartment (50) side of the partition (23) to provide an enclosure for the chamber (40) and duct (21); in that the outside air intake (30) is provided in the first shell (25); and in that the chamber is defined by the first shell (25), a wall part (37) of the second shell and a partition wall (28) covering the evaporator (22), whereby the duct (21) passes in a U-shape around three sides of the chamber (40).

2. A system according to claim 1, wherein the chamber (40) has at least one additional passenger compartment air intake (33) which is opened and closed by at least one dead weight type damper, the weight of the damper being overridden by airflow in excess of a threshold value so that the additional air intake (33) is opened automatically to provide or increase recirculation of passenger compartment air.

3. A system according to claim 1 or claim 2, further comprising another duct (29) to lead air from the air blower to the evaporator.

## Patentansprüche

1. Klimaanlage für Kraftfahrzeuge mit einer Leitung (21), durch die behandelte Luft durch ein Luftgebläse (24) in einen Fahrgastraum 50 eines Automobiles geblasen werden kann, wobei ein offenes Ende der Leitung an einer Öffnung (231) angeordnet ist, die in einer Trennwand (23) gebildet ist, die den Fahrgastraum (50) von einem Motorraum (60) trennt, und das Luftgebläse benachbart zu dem einen offenen Ende der Leitung angeordnet ist, einem in der Leitung vorgesehenen Verdampfer (22); einem in der Leitung vorgesehenen Heizer (26); einer das Luftgebläse bedekkenden ersten Hülle (25), wobei das offene Ende der Hülle mit dem offenen Ende der Leitung verbunden ist; und einer Kammer (40) mit einem Außenlufteinlaß (30) und einem Fahrgastraumlufteinlaß (31), die durch eine Luftklappe (32) abwechselnd geöffnet und geschlossen werden;
dadurch gekennzeichnet, daß die erste Hülle (25) auf der Motorraumseite der Trennwand (23) angeordnet ist und mit einer zweiten Hülle (24) auf der Fahrgastraumseite der Trennwand (23) zum Vorsehen eines Einschlusses für die Kammer 40 und der Leitung 21 zusammenwirkt; daß der Außenlufteinlaß (30) in der ersten Hülle (25) vorgesehen ist und daß die Kammer durch die erste Hülle (25), einen Wandteil (37) der zweiten Hülle und eine den Verdampfer (22) bedeckenden Trennwand (28) definiert ist, wodurch die Leitung (21) in einer U-Form um die drei Seiten der Kammer (40) geht.

2. Anlage nach Anspruch 1, bei der die Kammer (40) mindestens einen zusätzlichen Fahrgastraumlufteinlaß (33) aufweist, der durch mindestens eine Luftklappe vom Eigengewichtstyp geöffnet und geschlossen wird, wobei das Gewicht der Luftklappe durch Luftfluß im Überschuß eines Grenzwertes so überwunden wird, daß der zusätzliche Lufteinlaß (33) automatisch geöffnet wird zum Vorsehen oder Erhöhen der Zirkulation der Fahrgastraumluft.

3. Anlage nach Anspruch 1 oder 2, weiter mit einer anderen Leitung (29) zum Leiten von Luft von dem Luftgebläse zu dem Verdampfer.

## Revendications

1. Système de climatisation de véhicules automobiles comprenant un conduit (21) par lequel de l'air conditionné peut être soufflé par une soufflerie d'air (24) vers la cabine (50) des passagers d'une automobile, une extrémité ouverte du conduit étant placée à l'endroit d'une ouverture (231) formée dans une cloison de séparation (23) séparant la cabine (50) des passagers du compartiment (60) du moteur, et la soufflerie d'air étant placée au voisinage de l'extrémité ouverte du conduit ; un évaporateur (22) disposé à l'intérieur du conduit ; un dispositif de chauffage (26) disposé à l'intérieur du conduit ; une première coque ouverte (25) recouvrant la soufflerie d'air de façon que l'extrémité ouverte de la coque soit reliée à l'extrémité ouverte du conduit ; et une chambre (40) comportant une prise d'air extérieure (30) et une prise d'air (31) de la cabine des passagers, ces prises d'air étant alternativement ouvertes et fermées par un volet (32) ; système caractérisé en ce que la première coque (25) est placée du côté compartiment moteur (60) de la cloison de séparation (23) et coopère avec une seconde coque (27) placée du côté compartiment des passagers (50) de la cloison de séparation (23), de manière à former une enceinte de la chambre (40) et du conduit (21) ; en ce que la prise d'air extérieure (30) est formée dans la première coque (25) ; et en ce que la chambre est définie par la première coque (25), par une partie de paroi (37) de la seconde coque et par une cloison de séparation (28) recouvrant l'évaporateur (22), de sorte que le conduit (21) passe en formant un U autour de trois côtés de la chambre (40).

2. Système selon la revendication 1, caractérisé en ce que la chambre (40) comporte au moins une prise d'air supplémentaire (33) de la cabine des passagers, cette prise d'air étant ouverte et fermée par au moins un volet de type à poids mort, le poids du volet étant surmonté par la pression du débit d'air dépassant une valeur de seuil, de façon que la prise d'air supplémentaire (33) soit ouverte automatiquement pour assurer ou augmenter le recyclage de l'air de la cabine des passagers.

3. Système selon la revendication 1 ou la revendication 2, caractérisé, en outre, en ce qu'il comprend un autre conduit (29) pour conduire l'air de la soufflante à l'évaporateur.
